# EUROPEAN PATENT APPLICATION

(11) **EP 2 578 712 A1**
(43) Date of publication of application: **10.04.2013**
(21) Application number: 11786795.2
(22) Date of filing: 23.05.2011
(51) Int. Cl.: C22C 38/00, C21D 9/08, C21D 9/28, C21D 9/50, C22C 38/06, C22C 38/58

(54) **ELECTRIC-RESISTANCE-WELDED STEEL PIPE WITH EXCELLENT TORSION FATIGUE RESISTANCE AND PROCESS FOR PRODUCING SAME**

(30) Priority: 22.02.2011 JP 2011035523; 19.01.2011 JP 2011008967; 27.05.2010 JP 2010121328
(71) Applicant: JFE Steel Corporation, Tokyo 100-0011 (JP)
(72) Inventor: ARATANI, Masatoshi, Tokyo 100-0011 (JP); KAWABATA, Yoshikazu, Tokyo 100-0011 (JP); OKABE, Takatoshi, Tokyo 100-0011 (JP); IIZUKA, Yukinori, Tokyo 100-0011 (JP); HORI, Hiromichi, Tokyo 100-0011 (JP); GUNJI, Makio, Tokyo 100-0011 (JP); IWAZAKI, Kenichi, Tokyo 100-0011 (JP)
(74) Representative: Grünecker, Kinkeldey, Stockmair & Schwanhäusser
(86) International application number: PCT/JP2011/062304
(87) International publication number: WO 2011/149098

(57) **Abstract**

Conventional electric resistance welded steel pipes cannot always ensure fatigue resistance required as drive shafts. In detail, a base material portion of an electric resistance welded steel pipe has a composition including C at 0.25 to 0.55%, Si at 0.01 to 1.0%, Mn at 0.2 to 3.0%, Al at not more than 0.1% and N at 0.0010 to 0.0100%, with the balance being represented by Fe and inevitable impurities, and the weld defect area, which is a projected area of a weld defect in an electric resistance weld zone, is less than 40000 µm².

## Description

### [Technical Field]

The present invention relates to an electric resistance welded steel pipe having excellent torsion fatigue resistance and a method for manufacturing the same.

### [Background Art]

In the automobile industry, hollowing of drive shafts has been implemented in order to meet both weight saving and stiffness increase. For the hollowing, seamless steel pipes are used as materials. For example, Patent Literature 1 describes hollow drive shafts that are manufactured from a seamless steel pipe as a material whose steel composition has been controlled into a desired range, and have an austenitic grain size number of not less than 9 as measured after hardening and exhibit excellent cold-workability, hardenability, toughness and torsion fatigue strength as well as stable fatigue life time. Because of their manufacture method, however, seamless steel pipes undergo such severe surface decarburizing and have such revere surface flaws that the surface has to be polished and ground in order to obtain sufficient fatigue resistance. In addition to this problem, such seamless steel pipes are not always suitable for rotating objects because of their eccentric and uneven thickness.

On the other hand, studies have been carried out to use electric resistance welded steel pipes that are less problematic in the above points for drive shaft applications. For example, Patent Literature 2 describes high strength steel pipes with excellent delayed fracture resistance that are manufactured from an electric resistance welded steel pipe as a material which has a steel composition controlled into a desired range and which is subjected to a hardening (quenching) and tempering treatment to form a steel microstructure in which a hardened area having a prior austenite grain diameter of not more than 10 µm represents not less than 30% of the area of a C cross section (a cross section perpendicular to the longitudinal direction of the pipe) of the steel pipe.

### [Citation List]

### [Patent Literature]

[PTL 1] International Publication WO 2006/104023
[PTL 2] Japanese Unexamined Patent Application Publication No. 2008-274344

### [Summary of Invention]

### [Technical Problem]

However, conventional electric resistance welded steel pipes have problems in that oxides formed during electric resistance welding remain on the electric resistance weld zone and in that inclusions in the vicinity of the weld zone (edges in the width direction of the material steel sheet that are butt welded together) are extruded because of upset (butt welding·pressure welding) during the welding. Thus, a problem is caused in that fatigue resistance required as drive shafts cannot be always ensured.
In order to solve the above problems, it is an object of the present invention to provide an electric resistance welded steel pipe with excellent torsion fatigue resistance, as well as a preferred manufacture method therefor, which is manufactured from a steel sheet as a material while detecting and managing defects such as oxides inclusion occurring in an electric resistance weld zone (a joint surface formed by electric resistance welding of edges to be welded together) so as to ensure that the resultant steel pipe, after being subjected to hardening and optionally further a tempering treatment, exhibit fatigue resistance required as a drive shaft.

### [Solution to Problem]

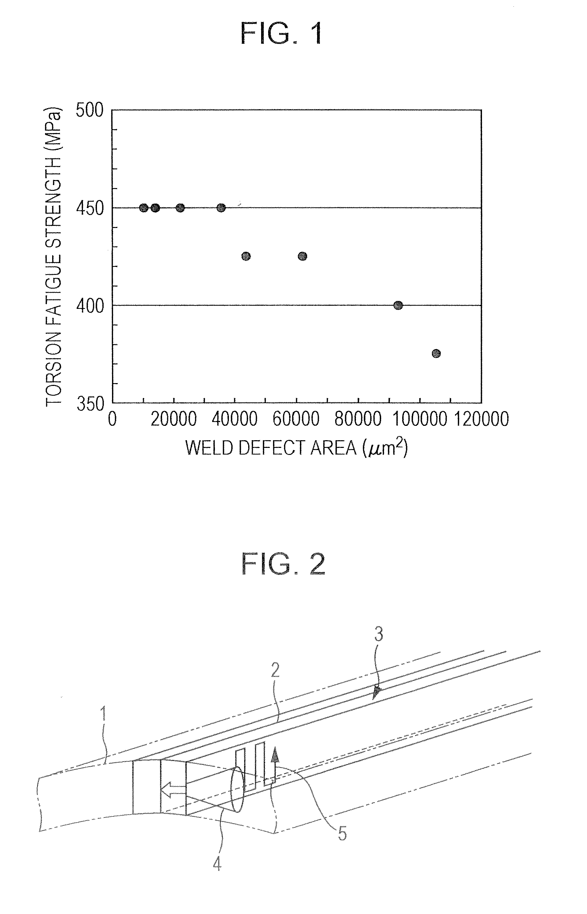

The present inventors have studied defects in the vicinity of an electric resistance weld zone which cause problems when the electric resistance welded steel pipe is used as a drive shaft. Before a steel sheet is welded into an electric resistance welded steel pipe, an edge surface (located at a position corresponding to a weld zone) on one side of the steel sheet was scratched with a drill to form flaws having different sizes, and thereafter the steel sheet was electric resistance welded. The electric resistance welded steel pipe was hardened and tempered, and was subjected to a torsion fatigue test. In the test, a relationship between the defect size at the electric resistance weld zone and the torsion fatigue strength was examined, the results being described in Fig. 1. Here, the defect size at the electric resistance weld zone was represented by the weld defect area described below.

The defect size at the electric resistance weld zone was determined in the following manner.
With respect to samples that were fractured in the torsion fatigue test as a result of cracks starting from a defect at the electric resistance weld zone, the fractured surface was directly observed with a scanning electron microscope (SEM) to determine the defect size.
With respect to samples that were fractured not from a defect at the electric resistance weld zone but from another portion, the defect at the electric resistance weld zone was examined by a C scan method for seam slice material (abbreviated to "C scan method") to determine the defect size.

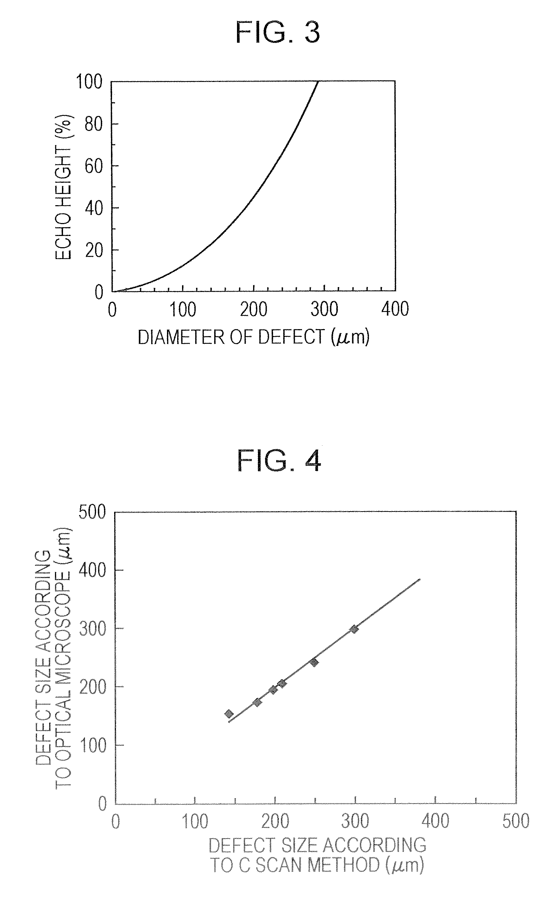

In the examination, as illustrated in Fig. 2, a sample 3 was defined by slicing an electric resistance welded steel pipe 1 at a position that was distant from a seam (an electric resistance weld zone) 2 by a predetermined distance (in this case, 8 mm). The seam portion was inspected for flaws with a spot focus type ultrasound probe 4 in a C scan mode (in which scanning was performed along a scanning direction 5), thereby measuring signal strengths.
Here, welding conditions for the electric resistance welded steel pipe included a combination of usual electric resistance welding conditions and conditions in which the welding heat input and the upset value were adjusted so as to minimally reduce the amount of minute defects, and these conditions were variously changed. The spot focus type ultrasound probe had a frequency of 10 MHz and a beam size of 1.2 mm x 1.2 mm. Flaw inspection was performed in such a manner that the detection range was adjusted such that the echo height from a drill hose with 1.6 mm diameter became 80% and was thereafter gained up to ten times. Fig. 3 shows a relationship between the signal strength (echo height) and the diameter of defect with the above setting of the detection range.
With respect to minute defects which were undetectable by the C scan method, an L cross section (a cross section in the longitudinal direction of the pipe) was observed with an optical microscope to determine the defect size.

In order to check beforehand the accuracy of the defect size (calculated from the echo height) detected by the C scan method, as illustrated in Fig. 4, a correlation between the defect size according to the C scan method and the results of defect size measurement with respect to an L cross section of the detected portion by optical microscope observation (magnification ratio: x400) was examined and found to be in a flair agreement. Thus, the measurement of the defect size by the C scan method was confirmed to be sufficiently accurate.

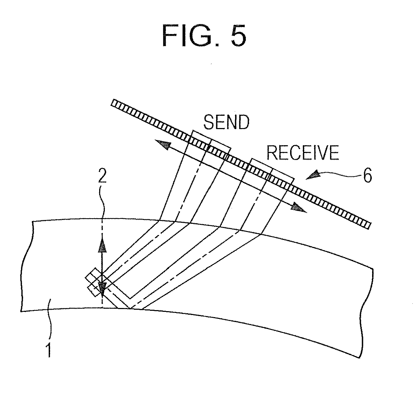

From the results of the examination, it has been repealed that a weld defect which is problematic in terms of the torsional fatigue of drive shafts is one which has a projected area in the electric resistance weld zone of not less than 40000 µm² irrespective of its shape. Although the defect size was detected by the C scan method in this examination, the similar measurement is also possible by tandem flaw inspection directly on the steel pipe using an ultrasonic beam focused to an appropriate size. To focus an ultrasonic beam, a spot focus type ultrasound probe similar to that used in the C scan method may be used. Alternatively, an array probe arranged in a circumferential direction as illustrated in Fig. 5 may be used.

As used herein, the term "weld defect" comprehends not only an actual defect such as a weld oxide, an inclusion or a void such as a weld shrinkage but also an aggregation (a cluster state defect) that is a collection of a plurality of actual defects separate from each other at nearest-neighbor intervals of not more than 50 µm.
According to the findings by the present inventors, a weld defect that has a projected area in the electric resistance weld zone of not less than 40000 µm² can be detected by ultrasonically scanning the electric resistance weld zone with an ultrasonic beam whose beam area is focused to not more than 5 mm².

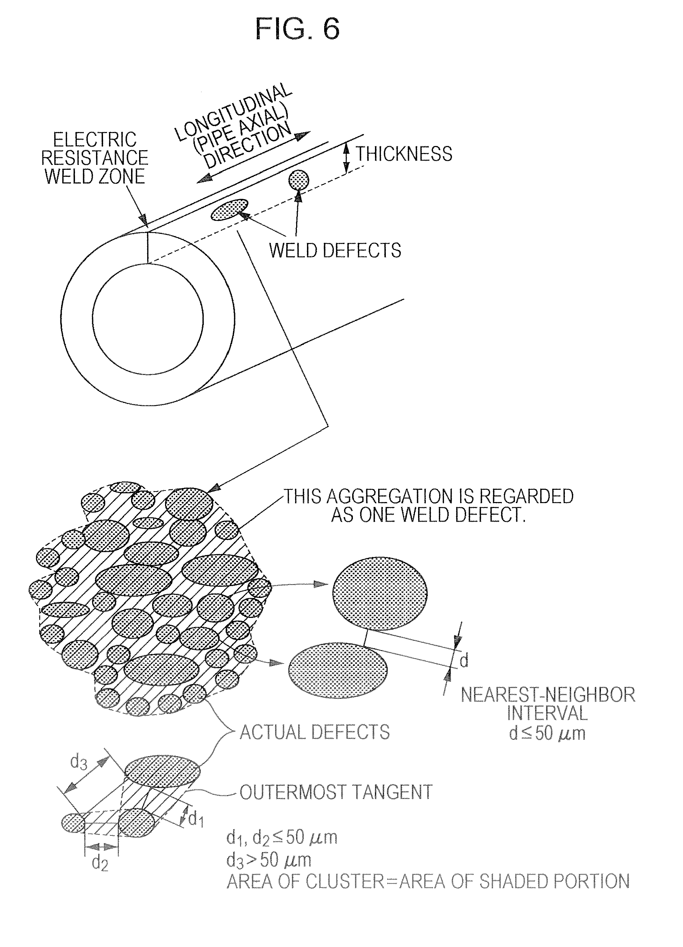

As used herein, the term "projected area of a weld defect in the electric resistance weld zone (namely, weld defect area)" is, as illustrated in Fig. 6 in which the electric resistance weld zone is shown as a projection plane, an area of each of actual defects separate from each other at nearest-neighbor intervals exceeding 50 µm in the projection plane, or an area of each region enclosed by the outermost tangent of an aggregation (a cluster state defect) (in the invention, this region also is regarded as one weld defect) that is formed by a collection of a plurality of actual defects separate from each other at nearest-neighbor intervals of not more than 50 µm in the projection plane.

As already mentioned, actual defects in the vicinity of the electric resistance weld zone are oxides formed during welding and inclusions that have been extruded because of upset. Thus, probing needs to be performed with respect to the electric resistance weld zone plus and minus 1 mm therefrom in a circumferential direction.
The present invention has been made based on the above-described findings. Configurations of the invention are summarized as follows.
(1) An electric resistance welded steel pipe with excellent torsion fatigue resistance, wherein a base material portion has a composition including, in terms of mass%, C at 0.25 two 0.55%, Si at 0.01 to 1.0%, Mn at 0.2 to 3.0%, Al at not more than 0.1% and N at 0.0010 to 0.0100%, with the balance being represented by Fe and inevitable impurities, and the weld defect area, which is a projected area of a weld defect in an electric resistance weld zone, is less than 40000 µm².
(2) The electric resistance welded steel pipe described in (1), wherein the composition further includes Ti at 0.005 to 0.1% and B at 0.0003 to 0.0050% and N/14 < Ti/47.9.
(3) The electric resistance welded steel pipe described in (1) or (2), wherein the composition further includes one, or two or more of Cr at not more than 2%, Mo at not more than 2%, W at not more than 2%, Nb at not more than 0.1% and V at not more than 0.1%.
(4) The electric resistance welded steel pipe described in any one of (1) to (3), wherein the composition further includes either or both of Ni at not more than 2% and Cu at not more than 2%.
(5) The electric resistance welded steel pipe described in any one of (1) to (4), wherein the composition further includes either or both of Ca at not more than 0.02% and REM at not more than 0.02%.
(6) The electric resistance welded steel pipe described in any one of (1) to (5), which is used for a drive shaft.
(7) A method, for manufacturing electric resistance welded steel pipes with excellent torsion fatigue resistance, including electric resistance welding a steel sheet that has a composition described in any one of (1) to (5) so as to form a pipe, thereafter ultrasonically scanning a region of the pipe ranging from an electric resistance weld zone to an extent of ±1 mm therefrom in a circumferential direction with an ultrasonic beam whose beam area is focused to not more than 5 mm², thereby detecting a weld defect having a weld defect area, which is a projected area of the weld defect in the electric resistance weld zone, of not less than 40000 µm², and removing a defect portion along a longitudinal direction of the pipe that has been specified to contain such a weld defect by the detection.
(8) The method for manufacturing electric resistance welded steel pipes described in (7), further including, after the defect portion is removed, subjecting the pipe to a hardening treatment or further to a tempering treatment to make the pipe into a drive shaft pipe.

### [Advantageous Effects of Intention]

The electric resistance welded steel pipes obtained according to the present invention reliably ensure fatigue resistance required for use as drive shafts.

### [Brief Description of Drawings]

[Fig. 1] Fig. 1 is a graph showing a relationship between the weld defect area and the torsion fatigue strength.
[Fig. 2] Fig. 2 is a schematic view illustrating a C scan method.
[Fig. 3] Fig. 3 is a graph showing an exemplary relationship between the signal strength (the echo height) and the diameter of defect.
[Fig. 4] Fig. 4 is a graph showing a correlation between the defect size according to a C scan method and that measured with an optical microscope.
[Fig. 5] Fig. 5 is a schematic view illustrating how an electric resistance weld zone is analyzed by an ultrasonic flaw inspection method using an array probe (an array UT method).
[Fig. 6] Fig. 6 is a view defining a cluster state defect.
[Fig. 7] Fig. 7 is a diagram showing a relationship between the beam area and S/N of a 40000 µm² defect.

### [Description of Embodiments]

The reasons why the steel composition in the invention is limited as described above will be described. The concentrations of components in the composition (the contents of components) are in terms of mass% and abbreviated as %.

### (Essential components)

### C: 0.25 to 0.55%

If the C content is less than 0.25%, sufficient hardness cannot be obtained even by hardening, thus failing to achieve required fatigue resistance. On the other hand, any C content exceeding 0.55% results in a decrease in weldability and consequently a stable electric resistance weld quality cannot be obtained. The C content is preferably 0.30 to 0.40%.

### Si : 0.01 to 1.0%

Silicon is sometimes added for the purpose of deoxidation. If the Si content is less than 0.01%, sufficient deoxidation effects cannot be obtained. At the same time, silicon is a solid solution hardening element. To obtain this effect, silicon needs to be added at not less than 0.01%. On the other hand, any Si content exceeding 1.0% results in a decrease in hardenability of steel pipes. Preferably, the Si content is 0.1 to 0.4%.

### Mn : 0.2 to 3.0%

Manganese is an elements that improves hardenability. To obtain this effect, manganese needs to be added at not less than 0.2%. On the other hand, any Mn content exceeding 3.0% results in a decrease in electric resistance weld quality as well as an increase in the amount of retained austenite and a decrease in fatigue resistance. The Mn content is preferably 0.5 to 2.0%.

### Al: not more than 0.1%

Aluminum is an effective element for deoxidation and is necessary in order to ensure strength after hardening by suppressing the growth of austenite grains during hardening. In order to obtain these effects, aluminum is preferably added at not less than 0.001%. However, adding aluminum in excess of 0.1% results in not only a saturation of the effects but also an increase in the amount of Al-containing inclusions and possibly a consequent decrease in fatigue strength. The Al content is preferably 0.01 to 0.08%.

### N: 0.0010 to 0.0100%

Nitrogen is an element that combines with aluminum and reduces the size of crystal grains. In order to obtain this effect, nitrogen needs to be added at not less than 0.0010%. If nitrogen is added in excess of 0.0100%, however, more boron atoms are combined with nitrogen to form boron nitride so that the amount of free boron atoms becomes insufficient, thereby deteriorating the effect of boron of improving hardenability. The N content is preferably 0.0010 to 0.005%.

### (Optional components)

The base material may contain other components, in detail, one, or two or more of the groups (A) to (D) in addition to the aforementioned components with the specific composition.
(A) Ti at 0.005 to 0.1% and B at 0.0003 to 0.0050% wherein N/14 < Ti/47.9.
(B) One, or two or more of Cr at not more than 2%, Mo at not more than 2%, W at not more than 2%, Nb at not more than 0.1% and V at not more than 0.1%.
(C) Either or both of Ni at not more than 2% and Cu at not more than 2%.
(D) Either or both of Ca at not more than 0.02% and REM at not more than 0.02%.
Hereinbelow, the reasons why the respective contents of these elements are limited will be described.

### Ti: 0.005 to 0.1%

Titanium has an effect of fixing nitrogen in steel in the form of TiN. If the Ti content is less than 0.005%, however, the nitrogen-fixing ability is not fully exhibited. On the other hand, adding titanium in excess of 0.1% results in decreases in the workability and toughness of steel. The Ti content is more preferably 0.01 to 0.04%.

### B: 0.0003 to 0.0050%

Boron is an element that improves hardenability. At less than 0.0003%, the effect of increasing hardenability is not fully exhibited. On the other hand, adding boron in excess of 0.0050% results in a saturation of the effect and causes boron to be segregated along grain boundaries to facilitate intergranular fracture, thereby deteriorating fatigue resistance. The B content is more preferably 0.0010 to 0.0040%.

### N/14 < Ti/47.9

In order to ensure free boron atoms, it is necessary to make sure that nitrogen be fixed by titanium. To this end, the N atom% (= N mass%/N atomic weight 14) needs to be smaller than the Ti atom% (= Ti mass%/Ti atomic weight 47.9).

### Cr: not more than 2%

Chromium is effective for increasing hardenability. To obtain this effect, chromium is preferably added at not less than 0.01%. If chromium is added in excess of 2%, however, the formation of oxides is facilitated and chromium oxides remain in the electric resistance weld zone to lower electric resistance weld quality. The Cr content is more preferably 0.01 to 0.5%.

### Mo: not more than 2%

Molybdenum is an element that improves hardenability and increases the strength of steel to effectively improve fatigue strength. In order to obtain these effects, molybdenum is preferably added at not less than 0.001%_{.} However, adding molybdenum in excess of 2% results in a marked decrease in workability. The Mo content is more preferably 0.001 to 0.5%.

### W: not more than 2%

Tungsten is effective for improving the strength of steel by forming a carbide. To obtain this effect, tungsten is preferably added at not less than 0.001%. If tungsten is added in excess of 2%, however, an unnecessary extra amount of the carbide is precipitated to lower fatigue resistance and workability. The W content is more preferably 0.001 to 0.5%.

### Nb: not more than 0.1%

Niobium is an element that improves hardenability and contributes to increasing strength by forming a carbide. In order to obtain these effects, niobium is preferably added at not less than 0.001%. However, adding niobium in excess of 0.1% results in a saturation of the effects and a decrease in workability. The Nb content is more preferably 0.001 to 0.04%.

### V: not more than 0.1%

Vanadium is an element that is effective for increasing the strength of steel by forming a carbide and hat a resistance to temper softening. In order to obtain these effects, vanadium is preferably added at not less than 0.001%. However, adding vanadium in excess of 0.1% results in a saturation of the effects and a decrease in workability. The V content is more preferably 0.001 to 0.5%.

### Ni: not more than 2%

Nickel is an element that improves hardenability and increases the strength of steel to effectively improve fatigue strength. In order to obtain these effects, nickel is preferably added at not less than 0.001%. However, adding nickel in excess of 2% results in a marked decrease in workability. The Ni content is more preferably 0.001 to 0.5%.

### Cu: not more than 2%

Copper is an element that improves hardenability and increases the strength of steel to effectively improve fatigue strength. In order to obtain these effects, copper is preferably added at not less than 0.001%. However, adding copper in excess of 2% results in a marked decrease in workability. The Cu content is more preferably 0.001 to 0.5%.

### Ca: not more than 0.02%, REM: not more than 0.02%

Calcium and a rare earth metal, which may be selected and added as required, are elements that control the morphologic form of non-metal inclusions into spherical shapes and are effective for decreasing the number of crack starting points which can cause a fatigue fracture under a use environment where, for example, pipes undergo repeated stress. These effects are seen when the base material contains calcium and a rare earth metal each at not less than 0.0020%. However, adding these elements in excess of 0.02% results in the generation of too much inclusions and a decrease in cleanliness. Thus, it is preferable that both the Ca content and the REM content be limited to be not more than 0.02%. When calcium and a rare earth metal are used in combination, the total content is preferably not more than 0.03%.

In the steel composition according to the invention, the balance after the deduction of the aforementioned components is represented by Fe and inevitable impurities.
Next, the reasons why the weld defect area is limited will be describes. As already mentioned, the weld defects defined in the invention include not only actual defects such as weld oxides, inclusions or voids such as weld shrinkage but also aggregations (cluster state defects) that are collections of a plurality of actual defects separate from each other at nearest-neighbor intervals of not more than 50 µm as illustrated in Fig. 6. Of these weld defects, only weld defects that have a projected area in the electric resistance weld zone (namely, a weld defect area) of not less than 40000 µm² adversely affect torsion fatigue resistance (see, for example, Fig. 1). Thus, the present invention provides that the weld defect area is essentially less than 40000 µm² (namely, the electric resistance weld zone is completely free from weld defects having a weld defect area of not less than 40000 µm²).

An aggregation of a plurality of actual defects separate from each other at nearest-neighbor intervals exceeding 50 µm has a negligibly small adverse effect on torsion fatigue resistance as long as each of the actual defects in the aggregation has a projected area of less than 40000 µm² in the electric resistance weld zone. Thus, such aggregations do not belong to the weld defects defined in the present invention.
Next, a preferred manufacturing method will be described. In an exemplary preferred method, a steel sheet that has a composition described in any one of (1) to (5) is electric resistance welded so as to form a pipe, thereafter a region of the pipe ranging from the electric resistance weld zone to an extent of ±1 mm therefrom in a circumferential direction is ultrasonically scanner with an ultrasonic beam whose beam area is focused to not more than 5 mm², thereby detecting a weld defect having a weld defect area, which is a projected area of the weld defect in the electric resistance weld zone, of not less than 40000 µm², and a defect portion along a longitudinal direction of the pipe that has been specified to contain such a weld defect by the detection is removed. According to this manufacturing method, the obtainable electric resistance welded steel pipe does not contain any weld defects having a weld defect area of not less than 40000 µm². Therefore, electric resistance welded steel pipes with excellent torsion fatigue resistance can be obtained reliably and stably. This electric resistance welded steel pipe may be subjected to hardening and optionally further to a treatment such as tempering, whereby a drive shaft pipe can be obtained which reliably ensures fatigue resistance required as a drive shaft.

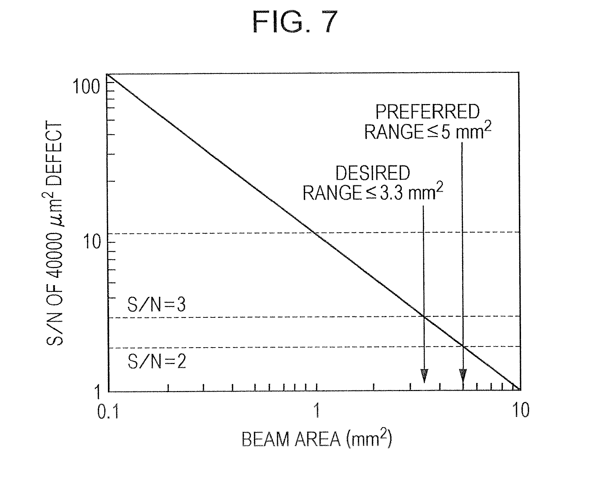

Next, there will be described the reasons why the focusing size of the ultrasonic beam is limited to not more than 5 mm² in terms of beam area. Because defects come to occupy a larger proportion relative to the applied beam as the size of the ultrasonic beam decreases, the S/N ratio of a defect echo becomes higher. Fig. 7 shows results of a study of S/N of a 40000 µm² defect. The detection of defects is possible when S/N ≥ 2. Thus, a preferred range of the ultrasonic beam area is not more than 5 mm². More desirably, the ultrasonic beam area is not more than 3.3 mm² at which S/N ≥ 3.

The lower limit is preferably 0.01 mm², which is a limit in view of the frequency of ultrasonic waves applicable to steel pipes as well as a geometric dimensional relationship between the steel pipe and the probe.

### [EXAMPLES]

Cast steel ingots which had steel compositions (mass%) described in Table 1 were hot rolled into steel sheets. These steel sheets as pipe materials were electric resistance welded into electric resistance welded steel pipes. In the manufacturing of the electric resistance welded steel pipes, the electric resistance welding conditions were adjusted by combining the welding heat input and the upset value into two conditions, namely, usual conditions which would hardly allow oxides and inclusions to remain (electric resistance welding conditions A in Table 2), and conditions under which oxides and inclusions tended to remain (electric resistance welding conditions B in Table 2). The electric resistance wielded steel pipes were manufactured under either of these conditions.
With respect to the electric resistance welded steel pipes manufactured, the weld defect sizes in the electric resistance weld zone were measured by a C scan method (Fig. 2) or an array UT method (Fig. 5), thereby determining the weld defect areas. Further, the electric resistance welded steel pipes were placed such that the electric resistance weld zone came exactly on the lateral center, and were subjected to a flattening test, in which the flattening value (height H of the pipe at the occurrence of a crack/outer diameter D of the pipe before flattening) was measured. Pipes which had a flattening value of not more than 0.5 were evaluated to be good in weld quality. Thereafter, the electric resistance welded steel pipes were subjected to cold drawing (working by cold drawing), then to normalizing (950°C x 10 min), subsequently to forming into a shape of hollow drive shaft, and thereafter hardening by high-frequency heating. Thus, drive shafts were manufactured.

After the hardening, some of the drive shafts were subjected to a tempering treatment at 180°C for 1 hour.
Separately, of the hot rolled steel sheets, after being welded into electric resistance welded steel pipes, were subjected to diameter-reduction rolling under diameter-reduction rolling conditions described in Table 2 (the heating temperature in Table 2 means a reheating temperature by induction heating) to give electric resistance welded steel pipes. (To be distinguished from the electric resistance welded steel pipes which were not subjected to diameter-reduction rolling, these electric resistance welded steel pipes will be hereinafter referred to as stretch reduced steel pipes.) The stretch reduced steel pipes were subjected to the similar cycle of weld defect size measurement → cold drawing → normalizing → forming → hardening (→ or further tempering).

For the comparison of properties with a conventional product (seamless steel pipe), steel having an identical composition was manufactured into a steel pipe through seamless steel pipe manufacturing steps and the steel pipe was subjected to a similar cycle of cold drawing → normalizing → forming → hardening (→ or further tempering). Thus, a drive shaft having the same size and the same shape was fabricated as a conventional product (tube No. 19 in Table 2).
With respect to the drive shafts that had been hardened or further tempered, tensile test pieces (ASTM proportional test pieces) were sampled from a hardened area in the axial direction and their tensile strength was measured. Thereafter, these drive shafts were subjected to a torsional fatigue test under completely reversed stress under conditions such that the shear stress τ on the external surface became 350 MPa, and the fatigue-life times were compared. The results of these property evaluations are described in Table 2.

From Table 2, all the drive shafts prepared from the electric resistance welded steel pipes or the stretch reduced steel pipes of INVENTIVE EXAMPLES were shown to have a longer fatigue-life time and higher torsion fatigue resistance than those of COMPARATIVE EXAMPLES, as well as to have a longer fatigue-life time and higher torsion fatigue resistance than the drive shaft (the conventional product) from the seamless steel pipe in COMPARATIVE EXAMPLE.
In this EXAMPLE, the pipe material for electric resistance welded steel pipes was a hot rolled steel sheet. However, the scope of the invention is not limited thereto and includes an embodiment in which a cold rolled steel sheet is used as the pipe material.

Even in the case where forge welded steel pipes are used in place of electric resistance welded steel pipes in the invention, the realization of forge welded steel pipes which can reliably ensure fatigue resistance required as drive shafts can be expected when defects present in the forge weld zones satisfy the defect size specified in the invention.

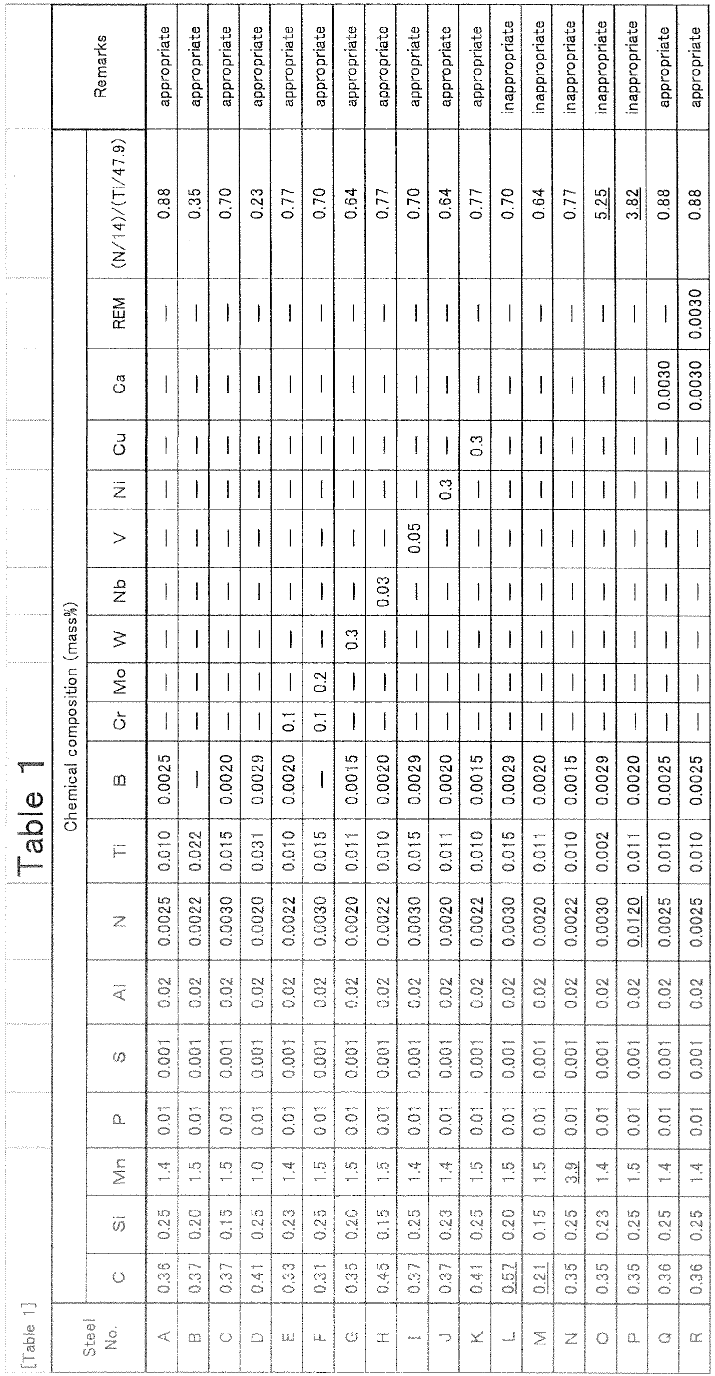

**[Table 2]**

| | | | | | | | Table 2 | | | | | | | | | |
|---|---|---|---|---|---|---|---|---|---|---|---|---|---|---|---|---|
| Pipe No. | Steel No. | Pipe type | Elect. res. welding conditions | Weld defect size measurement method | Weld defect area (µm²) | Weld zone quality (flattening value) | Stretch reducing conditions | | | Normalizing conditions | Quenching conditions | | Tempering conditions | Tensile strength (MPa) | Torsion fatigue life time (x100o0 times) | Remarks |
| | | | | | | | Heating temp. (°C) | Finish reducing temp. (°C) | Diameter reduction rolling rate (%) | | Heating temp. (°C) | Cooling method | | | | |
| 1 | A | Elect. res. welded steel pipe | A | Array UT | 10000 | 0.35 | - | - | - | 950°C× 10 min | 900 | Water cooling on extn. surf. | - | 1940 | 35 | INV- EX |
| 2 | B | Stretch reduced steel pipe | A | Array UT | 13000 | 0.35 | 950 | 800 | 50 | 950°Cx10 min | 900 | Water cooling on extn. surf | - | 1950 | 38 | INV. EX |
| 3 | C | Elect. res. welded steel pipe | A | Array UT | 20000 | 0.36 | - | - | - | 950°C×10min | 900 | Water cooling on extn. surf. | - | 1935 | 36 | INV. EX |
| 4 | D | Elect. res. welded steel pipe | A | Array UT | 25000 | 0.33 | - | - | - | 950°Cx10min | 900 | Water cooling on extn. surf. | 180°C×1h | 2050 | 45 | INV. EX |
| 5 | E | Stretch reduced steel pipe | A | C scan | 22500 | 0.35 | 950 | 800 | 50 | 950°Cx10 min | 900 | Water cooling on extn. surf. | - | 1880 | 34 | INV. EX |
| 6 | F | Elect. res. welded steel pipe | A | C scan | 90n | 0.35 | - | - | - | 950°C×10 min | 900 | Water cooling on extn. surf. | - | 1860 | 35 | INV. EX |
| 7 | G | Elect. res. welded steel pipe | A | Array UT | 10000 | 0.36 | - | - | - | 950°Cx10 min | 900 | Water cooling on extn. surf. | - | 1950 | 40 | INS. VEX |
| 8 | H | Elect. res. welded steel pipe | A | Array UT | 12000 | 0.39 | - | - | - | 950°Cx 10 min | 900 | Water cooling on extn. surf. | 180°C×1h | 2080 | 50 | INV. EX |
| 9 | i | Stretch reduced steel pipe | A | Array UT | 22000 | 0.33 | 950 | 800 | 50 | 950°Cx10min | 900 | Water cooling on extn. surf. | - | 1960 | 38 | INV, EX |
| 10 | J | Elect. res. welded steel pipe | A | Array UT | 20000 | 0.36 | - | - | - | 950°Cx 10 min | 900 | Water cooling on extn. surf. | - | 1955 | 40 | INV. EX |
| 11 | K | Elect. res. welded steel pipe | A | Array uT | 12500 | 0.33 | - | - | - | 950°C×10min | 900 | Water cooling on extn. surf | 160°Cx1h | 2035 | 48 | INV, EX |
| 12 | L | Elect. res. welded steel pipe | A | Array UT | 23500 | 0.75 | - | - | - | 950°C×10 min | 900 | Water cooling on extn. surf. | 180°C×1h | 2340 | 10 | COMP.EX |
| 1,3 | M | Sketch reduced steel pips | A | Array UT | 24to00 | 0.26 | 950 | 800 | 50 | 950°C×10 min | 900 | Water cooling on extn. surf. | - | 1220 | 15 | COMP. EX |
| 14 | N | Elect. res, welded steel pipe | A | Array UT | 10100 | 0.65 | - | - | - | 950°C×10 min | 900 | Water cooling on extn. surf. | - | 2020 | 13 | COMP. EX |
| 15 | O | Elect. res. welded steel pipe | A | C scan | 25000 | 0.38 | 950 | 800 | 50 | 950°C×10 min | 900 | Water cooling on extn. surf. | 180°Cx1h | 1650 | 10 | COMP, EX |
| 16 | P | Elect. res. welded steel pipe | A | Array UT | 15000 | 0.36 | - | - | - | 950°Cx10 min | 900 | Water cooling on extn. surf | - | 1660 | 15 | COMP. EX |
| 17 | A | Elect. res. welded steel pipe | B | Array TUT | 80000 | 0.58 | - | - | - | 950°Cx10 min | 900 | Water cooling on extn. surf. | - | 1950 | 12 | COMP. EX |
| 18 | B | Stretch reduced steel pipe | B | C scan | 150000 | 0.70 | - | - | - | 950°Cx10 min | 900 | Water cooling on extn. surf. | - | 1960 | 13 | COMP. EX |
| 19 | A | Seamless steel pipe | - | - | - | - | - | - | - | 950°Cx10 min | 900 | Water cooling on extn. surf. | - | 1940 | 10 | COMP. EX |
| 20 | A | Stretch reduced steel pipe | A | Array UT | 10000 | 0.35 | 950 | 850 | 50 | 950°C×10 min | 900 | Water cooling on extn. surf. | - | 1890 | 75 | INV. EX |
| 21 | B | Sketch reduced steel pipe | A | Array UT | 13000 | 0.35 | 960 | 880 | 60 | 950°C×10 min | 900 | Water cooling on extn. surf. | - | 1890 | 75 | INV. EX |
| 22 | C | Stretch reduced steel pipe | A | Array UT | 20000 | 0.36 | 930 | 820 | 50 | 950°C×10 min | 900 | Water cooling on extn. surf | 180°C×1h | 1890 | 100 | INV. EX |
| 23 | A | Stretch reduced steel pipe | A | Array UT | 10000 | 0.35 | 930 | 780 | 50 | 950°C× 10 min | 900 | Water cooling on extn. surf. | 180°C×1h | 1890 | 100 | INV. EX |
| 24 | D | Sketch reduced steel pipe | A | Array UT | 25GOO | 0.33 | 900 | 850 | 50 | 950°C×10 min | 900 | Water cooling on extn, surf. | 180°C×1h | 1890 | 100 | INV. EX |
| 25 | Q | Stretch reduced steel pipe | A | Array UT | 12coy | 0.34 | 950 | 800 | 50 | 950°Cx10 min | 900 | Water cooling on extn. surf. | - | 1960 | 52 | INV. EX |
| 26 | R | Stretch reduced steel pipe | A | Array UT | 1200C | 0.34 | 950 | 800 | 50 | 950°C×10 min | 900 | Water cooling on extn. surf. | - | 1980 | 55 | INV, EX |

## Claims

1. An electric resistance welded steel pipe wherein a base material portion has a composition comprising, in terms of mass%, C at 0.25 to 0.55%, Si at 0.01 to 1.0%, Mn at 0.2 to 3.0%, Al at not more than 0.1% and N at 0.0010 to 0.0100%, with the balance being represented by Fe and inevitable impurities, and the weld defect area, which is a projected area of a weld defect in an electric resistance weld zone, is less than 40000 µm².

2. The electric resistance welded steel pipe according to Claim 1, wherein the composition further comprises Ti at 0.005 to 0.1% and B at 0.0003 to 0.0050% and N/14 < Ti/47.9.

3. The electric resistance welded steel pipe according to Claim 1 or 2, wherein the composition further comprises one, or two or more of Cr at not more than 2%, Mo at not more than 2%, W at not more than 2%, Nb at not more than 0.1% and V at not more than 0.1%.

4. The electric resistance welded steel pipe according to any one of Claims 1 to 3, wherein the composition further comprises either or both of Ni at not more than 2% and Cu at not more than 2%.

5. The electric resistance welded steel pipe according to any one of Claims 1 to 4, wherein the composition further comprises either or both of Ca at not more than 0.02% and REM at not more than 0.02%.

6. The electric resistance welded steel pipe according to any one of Claims 1 to 5, which is used for a drive shaft.

7. A method for manufacturing electric resistance welded steel pipes, comprising electric resistance welding a steel sheet that has a composition described in any one of Claims 1 to 5 so as to form a pipe, thereafter ultrasonically scanning a region of the pipe ranging from an electric resistance weld zone to an extent of ±1 mm therefrom in a circumferential direction with an ultrasonic beam whose beam area is focused to not more than 5 mm², thereby detecting a weld defect having a weld defect area, which is a projected area of the weld defect in the electric resistance weld zone, of not less than 40000 µm², and removing a defect portion along a longitudinal direction of the pipe that has been specified to contain such a weld defect by the detection.

8. The method for manufacturing electric resistance welded steel pipes according to Claim 7_{,} further comprising, after the defect portion is removed, subjecting the pipe to a hardening treatment or further to a tempering treatment to make the pipe into a drive shaft pipe.
